Europäisches Patentamt

**European Patent Office**

Office européen des brevets

(11) Publication number: **0 196 543**
**A2**

## (12) EUROPEAN PATENT APPLICATION

(21) Application number: **86103645.7**

(22) Date of filing: **18.03.86**

(51) Int. Cl.⁴: **H 02 P 7/29**

(30) Priority: **28.03.85 US 717130**

(43) Date of publication of application:
**08.10.86 Bulletin 86/41**

(84) Designated Contracting States:
**DE FR GB IT SE**

(71) Applicant: **KOLLMORGEN TECHNOLOGIES
CORPORATION
Suite 300 2001 Bryan Tower
Dallas Texas 76201(US)**

(72) Inventor: **Eichenwald, Rolf
32 Buckingham Meadow Road
Setauket, NY 11733(US)**

(74) Representative: **Königseder, Claudia D.
Zugspitzstrasse 65
D-8104 Grainau(DE)**

(54) **Current control of an inductive load.**

(57) In a control system for an inductive load, the actual current in the inductive load is maintained within a small range of an ideal current. When used to control an inductive load such as an electric motor, an H-bridge type configuration of serially connected pairs of photosensitive switches and diodes is used to apply voltages to the inductive load. A control circuit which preferably includes an operational amplifier generates the necessary signals to operate the switches such that the actual current closely approximates the ideal current.

FIG. 2

This invention relates generally to the control of an
inductive load and, more specifically, to the current
control of an electric motor.

Presently, most servo motor controls use an error signal
to control switching amplifiers to regulate motor current.
The error signal is generated by summing the command
signal and a feedback signal that is of opposite polarity
and proportional to the actual current or other parameter
being controlled. These circuits are usually of the proportional or the proportional plus derivative type. Both
of these circuits can be trusted to give good performance,
but both have linearity and time delay problems. In
addition, the operation of these circuits depends on the
load parameters such as the magnitude, inertia, friction,
damping etc.

Many motor controls use pulse width modulated switching
amplifiers where current pulses are being modulated to
give an average current of the desired value. Pulse width
modulation systems are characterized by high peak currents
resulting in a reduced power rating for the system, e.g.,
a power rating lower than could be achieved with a continuous current control system.

An object of this invention is to provide a current control
system which can be used to control an electric motor and
wherein the current control is of generally continuous
nature.

Another object of the invention is to provide a motor
control system wherein a continuous current is supplied
for control of the motor, the continuous current being
maintained within a predetermined increment of the command
current signal.

The apparatus of this invention for regulating
the current in an inductive load comprises first switching
means for applying a voltage having a first polarity to the
inductive load within a predetermined time such that the
current in the inductive load increases until the current
reaches a maximum value within a desired range, and for allowing the current in the inductive load to decrease until the current reaches a minimum value within the desired range; and control means responsive to a command signal and a signal indicative of the current in the inductive load for operating said first switching means.

In a second embodiment, the apparatus further comprises second switching means responsive to said control means for applying a voltage having a second polarity to the inductive load within a predetermined time such that the current in the inductive load decreases until the current reaches a minimum value within the desired range, and for allowing the current in the inductive load to increase until the current reaches a maximum value within the desired range.

In a preferred embodiment, said control means includes an operational amplifier having a feedback loop and said first and second switching means each include two pairs of photosensitive switches which are responsive to two pairs of serially connected light emitting diodes, said pairs of diodes being oppositely poled and coupled to the output of said operational amplifier. Said feedback loop may include first resistance means and the command and the current signal indicative of the inductive load may be coupled to the input of said operational amplifier by second and third resistance means.

The method of the invention for regulating the current of an inductive load comprises the steps of applying a positive voltage to the inductive load within a predetermined time period which causes the current in the inductive load to be offset by a positive value and to increase until the current reaches a maximum positive value within a desired range; and allowing the current in the inductive load to decrease until the current reaches a minimum positive value within the desired range, characterized in that the steps of applying voltage and allowing the current to decay are repeated such that the actual current flowing through the inductive load follows within a small range

of a command current.

In a second version, it further includes the steps of applying a negative voltage to the inductive load within the predetermined time period which causes the current in the inductive load to be offset by a negative value and to decrease until it reaches a maximum negative value within a desired range, and allowing the current in the inductive load to increase until the current reaches a minimum negative value within the desired range.

The control system of the invention takes advantage of the inherent characteristic of inductive loads, i.e., the time derivative character of current flow through the inductance, in order to achieve regulation. The inductance can be the inductance of the load, or, in the case of low inductance motors, an inductance can be added to the load circuit. An inductive load tends to resist changes in current and, thus, the actual current flow through the inductance lags the applied voltage. According to the invention, this time derivative of the load current is usually employed to achieve regulation.

In the present invention, the actual current applied to the inductive load is always maintained within a certain small range of a desired value such that the actual current closely approximates an ideal current profile. This differs from the normal servo control where an error signal is derived by comparison of the actual current and the desired current, and the error signal is used to control a current regulator so as to minimize the error signal. With this invention, when the actual current drops to a value that is a small predetermined amount below the desired current, more current is applied to the inductive load, and when the actual current rises to a value that is a small predetermined amount above the desired current, current from the supply is cut off and current flow through the inductive load decays. In this manner, current applied to the load quickly adjusts to the desired value and, under steady state conditions, the current is generally continuous and

always close to the desired value.

In the preferred embodiment of the invention, the current is regulated by a control circuit having an operational amplifier that is responsive to a command current and a feedback signal proportional to actual current. A high gain amplifier regenerative circuit is used to provide a bi-stable offset. The amplifier output remains in one state until the actual current exceeds the command current by a predetermined amount, and switches to the other state when the actual current falls below the command current by a predetermined amount. The amplifier output can then be used to control current flow to the inductive load by supplying current in response to one state of the amplifier and permitting the current to inductively decay during the other state. In this manner, the actual current supplied to the actual load is maintained within a predetermined value of the desired current command.

Figure 1 is a waveform diagram of ideal and actual currents associated with the invention.

Figure 2 is a schematic circuit diagram of an inductive load and switches that are useful in explaining the operation of the present invention.

Figure 3 is a block diagram of the circuitry used to operate the switches of Figure 2.

Figure 4 is an enlarged portion of the waveform diagram of Figure 1.

Figure 5 is a schematic diagram of the preferred circuit that provides the control for the switches of Figure 2.

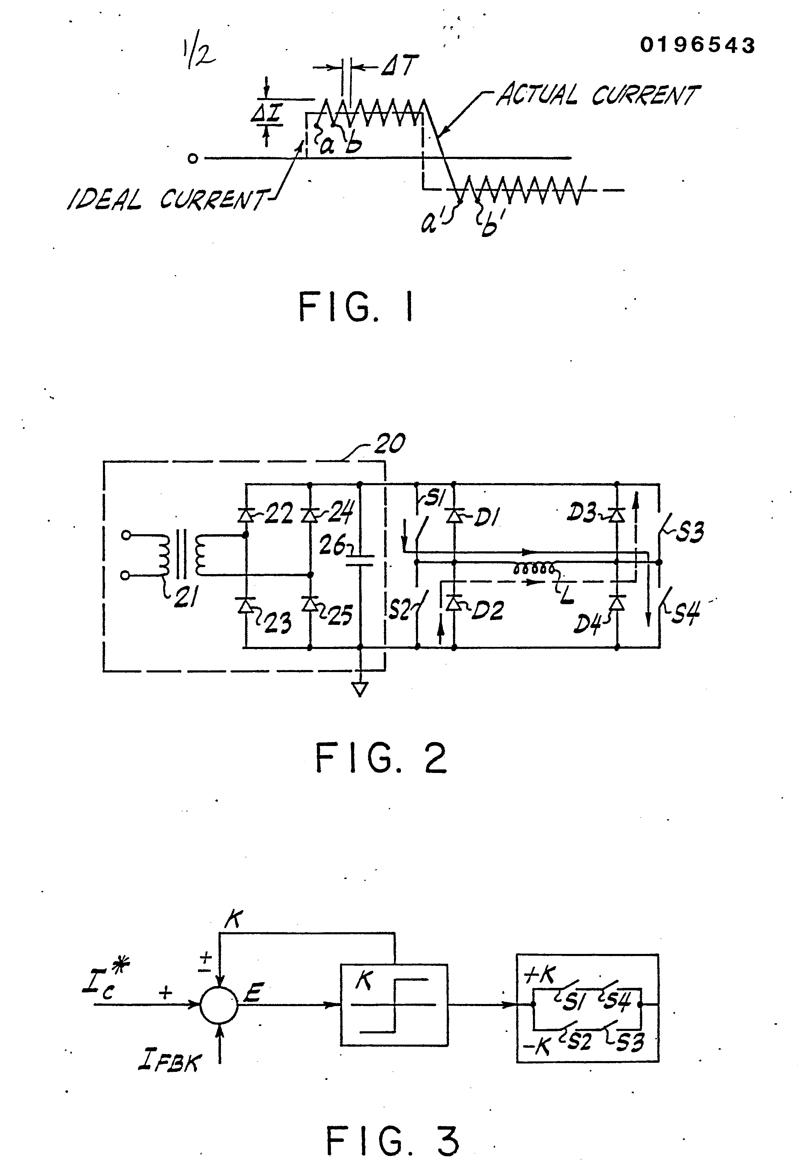

The invention provides a technique of regulating or controlling the current in an inductive load such that the actual current is always within a certain range of an ideal value. The waveform diagram of Figure 1 illustrates an ideal waveform and an actual waveform that are associated with this current control technique. Controlling the current in such a fashion is applicable to any type of inductive load including an electric motor. The inductive load or electric motor can be operated in either steady state or transient modes in accordance with the invention.

The current control techniques of this invention are hereinafter discussed in terms of a DC motor or a printed circuit motor which can be illustrated simply as an inductor for the purposes of this invention. It should be pointed out, however, that the invention is applicable to the control of any inductive loads and the description of an electric motor is not intended to limit the scope of the invention in any way.

Current and inductance are related by the well known equation

$$V = L\frac{\Delta I}{\Delta T} \; , \; \frac{\Delta I}{\Delta T} = \frac{V}{L}$$

Thus, for a certain voltage and a certain inductance, there is a defined ratio of $\Delta I$ and $\Delta T$.

Referring to Figure 1, the actual current has exactly such relationship. The ideal current of Fig. 1 is illustrated as a square wave, but the ideal current can have any type of waveform. The square wave is probably the most extreme example and is well suited for explanatory purposes.

In order to obtain the actual current of Fig. 1, a positive voltage can be applied to an inductive load for a certain time $\Delta T$ to obtain a first or increasing change in current $\Delta I$. In order to obtain a second or decreasing change in current $\Delta I$, a negative voltage is then applied to the inductive load in the same manner. This process can be repeated such that the actual current waveform closely approximates the ideal current waveform. The actual waveform varies from the ideal square waveform by the amount $\Delta I$ except at transition points.

Referring to Figure 2, a block diagram illustrates a circuit that is capable of generating the actual waveform described above. The circuit includes an H-bridge configuration having an inductive load or inductor L connected between the four legs of the bridge. The four legs of the bridge include diodes D1 to D4 and switches S1 to S4.

The circuit is connected to a power supply 20 that causes a current to flow through the inductor L. The power supply includes a transformer 21 that is connected to a diode bridge having diodes 22 to 25 which are connected in a conventional fashion. A filtering capacitor 26 is coupled across the output of the diode bridge.

When S1 and S4 are closed, a voltage V from the power supply 20 is applied across the inductor L and current flows in an increasing manner as shown by the solid arrows. When S1 and S4 are opened, the current decays and flows in the direction of the dotted arrow. By controlling the operation of switches S1 and S4 then, it is possible to obtain a current that resembles the actual current of Fig. 1 between points a and b. The current can be controlled in the opposite direction by similarly operating switches S2 and S3 to obtain a current which resembles the actual current between points a' and b' (Fig. 1). It can be appreciated by those skilled in the art that this arrangement provides a four quadrant system.

In order to implement the technique described above for controlling the current to the inductor L, a circuit for controlling the operation of the switches S1 to S4 is necessary.

From Fig. 1 it can be appreciated that the actual current is allowed to go to a value of $\Delta I/2$ above and below the desired or ideal value. It is, therefore, necessary, to know when the current is $\Delta I/2$ and to turn on the switches S1 to S4 in the power section.

Fig. 3 provides a block diagram of a circuit which is capable of operating switches S1 to S4 in such a fashion. $I_C$ is the current command and it is proportional to the desired current. The current command $I_C$ may be generated by a transducer, microprocessor, or the like. $I_{FBK}$ is proportional to the actual current and can be obtained through a current sensor. K is an offset voltage that is proportional to a predetermined value and it is added to or subtracted from $I_C$, as required. E is a signal value whose polarity depends on the relative magnitudes of $I_C$, $I_{FBK}$ and K and it, in turn, determines the polarity of K and the switching of S1 to S4.

In order to generate the actual current waveform, the circuit of Fig. 3 operates in the following manner. A positive $I_C$ is applied to the circuit and a positive K is added to it at a summing junction. The error signal is positive and turns on S1 and S4 until $I_{FBK} = I_C + K$. At this point, E goes negative and so does K. Switches S1 and S4 are turned off and remain off until $I_{FBK} = I_C - K$.

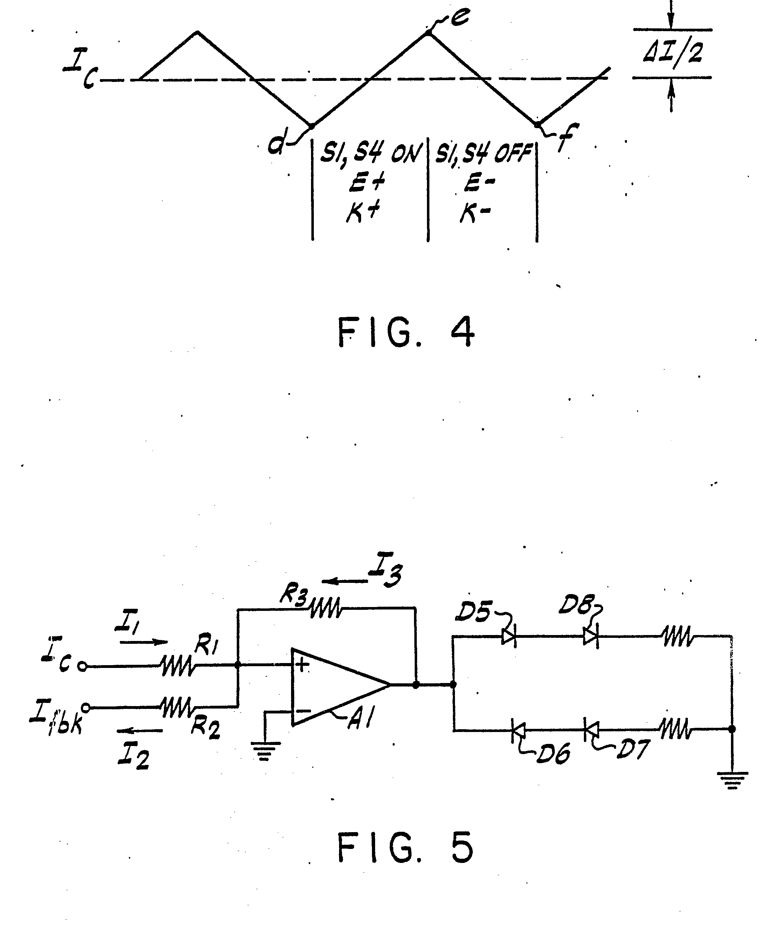

Referring to Figure 4, an enlarged portion of the actual waveform of Fig. 1 illustrates how the actual current in inductor L varies in response to the operation of switches S1 and S4. When switches S1, S4 are turned on, the actual current between points d and e increases. When switches S1 and S4 are turned off, the actual current between points e and f decreases.

The actual control signals used to operate the switches S1 to S4 are preferably provided in the circuit illustrated in Fig. 5, including an operational amplifier A1, three resistors $R_1$, $R_2$, $R_3$, and light emitting diodes D5 to D8. The diodes D5-D8 are optically coupled to the photosensitive switches S1-S4, respectively, such that when one of the diodes is illuminated the corresponding switch is turned on.

The circuit of Fig. 5 performs all the above mentioned functions, namely comparing $I_1$, $I_2$, and $I_3$ ($I_C$, $I_{FBK}$ and K) switching at the proper levels of the above three and at the same time providing a signal of proper polarity for K (or $I_3$ in this case) and for S1-S4. The circuit also performs identically for negative values of $I_C$. If it is desired to adjust the value of $\Delta I$ in the circuit, it can be done by simply changing the value of $R_3$. The resistor $R_3$ is substantially larger than resistors $R_1$ or $R_2$ and causes the amplifier A1 to provide the desired offset output. Thus, the circuit of Fig. 5 controls switches S1-S4 of the bridge and obtains the actual current waveform of Fig. 1.

The apparatus and method of the present invention provide an extremely simple current regulator which prodices an actual current at any time that is within $\Delta I/2$ of the desired value. The current regulator eliminates overshoot or undershoot and there are no control delays which might affect system stability. By simply changing $R_3$, any value of $\Delta I/2$ can be obtained. The current regulator will automatically work if a negative command is applied, thereby obtaining four quadrant operation.

The apparatus of this invention has been described in the context of a printed circuit or disc motor which has virtually no inductance. In this case, an external inductor L must be introduced to limit the current. By proper selection of L, equation (1) can be satisfied and any desired $\Delta T$ and, therefore, switching frequency can be determined for any V and $\Delta I$. This control technique, however, as mentioned above can also be applied to any inductive load such as a standard iron rotor motor, stepper motor, inductive heater etc.

The technique can be further expanded to control the speed of a DC motor. This can be accomplished by adding a speed regulator in front of the current regulator of Fig. 5. A speed command is compared with a speed feedback signal and the difference is used as an error signal which becomes the current command $I_C$.

CLAIMS

1.       An apparatus for regulating the current in an inductive load, characterized in that it comprises first switching means for applying a voltage having a first polarity to the inductive load within a predetermined time such that the current in the inductive load increases until the current reaches a maximum value within a desired range, and for allowing the current in the inductive load to decrease until the current reaches a minimum value within the desired range; and control means responsive to a command signal and a signal indicative of the current in the inductive load for operating said first switching means.

2.       The apparatus of claim 1, characterized in that it further comprises second switching means responsive to said control means for applying a voltage having a second polarity to the inductive load within a predetermined time such that the current in the inductive load decreases until the current reaches a minimum value within the desired range, and for allowing the current in the inductive load to increase until the current reaches a maximum value within the desired range.

3.       The apparatus of claim 2 wherein said control means include an operational amplifier having a feeback loop.

4.       The apparatus of claim 3 wherein said first and second switching means each include two pairs of photosensitive switches which are responsive to two pairs of serially connected light emitting diodes, said pairs of diodes being oppositely poled and coupled to the output of said operational amplifier.

5. The apparatus of claim 4 wherein said feedback loop includes first resistance means and the command signal and the current signal indicative of the inductive load are coupled to the input of said operational amplifier by second and third resistance means.

6. A method for regulating the current of an inductive load comprising the steps of applying a positive voltage to the inductive load within a predetermined time period which causes the current in the inductive load to be offset by a positive value and to increase until the current reaches a maximum positive value within a desired range; and allowing the current in the inductive load to decrease until the current reaches a minimum positive value within the desired range, characterized in that the steps of applying voltage and allowing the current to decay are repeated such that the actual current flowing through the inductive load follows within a small range of a command current.

7. The method of claim 6 further including the steps of applying a negative voltage to the inductive load within the predetermined time period which causes the current in the inductive load to be offset by a negative value and to decrease until it reaches a maximum negative value within a desired range; and allowing the current in the inductive load to increase until the current reaches a minimum negative value within the desired range

FIG. 1

FIG. 2

FIG. 3

0196543

0196543

$I_C$

$\Delta I/2$

| S1, S4 ON | S1, S4 OFF |
|-----------|------------|
| E+        | E−         |
| K+        | K−         |

FIG. 4

FIG. 5